# EUROPEAN PATENT APPLICATION

(11) **EP 4 745 004 A1**
(43) Date of publication of application: **20.05.2026**
(21) Application number: 25212197.5
(22) Date of filing: 30.10.2025
(51) Int. Cl.: B62D 5/04, B62D 7/02, B60S 9/215, B60S 9/16

(54) **VEHICLE MOVER**

(30) Priority: 18.11.2024 CN 202422823193 U; 30.05.2025 CN 202510715558
(71) Applicant: Zhejiang Nowvow Mechanical and Electrical Corp., Ltd., Jinhua Zhejiang 321017 (CN)
(72) Inventor: ZHANG, Litian, Jinhua, Zhejiang, 32107 (CN); ZHOU, Jun, Jinhua, Zhejiang, 321017 (CN); ZHANG, Chunxiang, Jinhua, Zhejiang, 32107 (CN); NI, Muchen, Jinhua, Zhejiang, 321017 (CN)
(74) Representative: karo IP

(57) **Abstract**

A vehicle mover, which relates to a vehicle mover technology and solves the problems of conventional vehicle movers such as steering awkwardness and proneness to collision with an operator. The solution mainly includes a frame (1), an in-wheel motor (2), and a support shaft (4), the in-wheel motor including a wheel hub (21), a left cap (22) and a right cap (23) being fixedly mounted on both sides of the wheel hub (21); a steering mechanism is disposed between the frame and the support shaft, the steering mechanism (3) including a steering motor (31) and a transmission member; a controller is provided on the frame; a reduction mechanism (25) is drivingly connected to an output shaft of a driving motor (24); the driving motor and the reduction mechanism are both located between the left cap and the right cap; the reduction mechanism includes a sun gear, a planetary gear (252), a fixed ring gear (253), and a moving ring gear (254); the planetary gear drives the moving ring gear to rotate to thereby drive the right cap to rotate. The present invention may autonomously control steering of the vehicle mover via the steering mechanism; by disposing the driving motor and the reduction mechanism within the wheel hub, the footprint of the vehicle mover is reduced, and a possibility of collision between the vehicle mover and an operation is lowered.

## Description

The present invention relates to a vehicle mover technology, and more particularly relates to a vehicle mover.

A vehicle mover is a specialized machine for transferring a towable recreational vehicle, a trailer, a cargo trailer, or a yacht. For a vehicle that cannot be self-propelled, it can be moved by the vehicle mover.

A vehicle mover generally comprises a frame, an in-wheel motor and a tire fixed around an outer circumferential side of the in-wheel motor, the in-wheel motor comprising a driving motor, a reduction mechanism drivingly connected to the driving motor, and a wheel hub driven to rotate by the driving motor. However, to operate a conventional electric vehicle mover, an operator is required to manually manipulate a handle to control its travel direction. Since a to-be-transferred object is usually heavy, the operator needs to exert a large external force to manually manipulate the vehicle mover to turn, which is strenuous to the operator. In addition, the driving motor and the reduction mechanism are conventionally arranged on the left and right sides of the outer surface of the wheel hub, respectively, so that a powered transfer wheel has a greater length in the axial direction of the wheel hub and the in-wheel motor has a larger swept area for turning of the vehicle mover; since the operator is close to the vehicle mover when manually manipulating the vehicle mover, he/she likely bumps into the vehicle mover, posing a potential safety hazard.

To address the problems of conventional vehicle movers such as steering awkwardness and proneness to collision with an operator, a vehicle mover is provided herein, which enables automatic steering control via a steering mechanism; by disposing the driving motor and the reduction mechanism in the wheel hub, the present invention reduces the footprint of the vehicle mover and thus lowers a potential collision between the vehicle mover and the operator.

To overcome the problems of the conventional technologies, a a vehicle mover according to Claim 1 is proposed. Embodiments thereof are subject-matter of the dependent claims.

The present invention adopts a technical solution below:

A vehicle mover, comprising a frame, an in-wheel motor configured to drive the frame to move, and a support shaft disposed on a top end of the frame and rotatably connected to the frame, the in-wheel motor comprising a wheel hub with a tire sleeved around its outer circumferential side and a driving motor actuating the wheel hub to rotate, a left cap and a right cap being securely attached to both lateral sides of the wheel hub, wherein a steering mechanism is disposed between the frame and the support shaft, the steering mechanism comprising a steering motor and a transmission member drivingly connected to the support shaft; the steering motor is fixed relative to the frame and configured to drive, via the transmission member, the support shaft to rotate relative to the frame; a controller configured to control the steering motor and the driving motor is provided on the frame; a reduction mechanism is drivingly connected to an output shaft of the driving motor, the driving motor and the reduction mechanism being both located between the right cap and the left cap; and the reduction mechanism comprises a sun gear driven by the output shaft, a planetary gear meshing with the sun gear, and a fixed ring gear and a moving ring gear which mesh on an outer circumferential side of the planetary gear, the fixed ring gear remaining fixed relative to the driving motor, the moving ring gear being securely connected to the right cap, the planetary gear driving the moving ring gear to rotate, whereby the right cap is driven to rotate.

The present invention offers the following beneficial effects:

In the present invention, the steering mechanism drives, via the steering motor, the transmission member to implement relative rotation between the support shaft and the frame. When the vehicle mover is in use, the support shaft is securely connected to a to-be-transferred object; when the vehicle mover needs to turn, the steering motor is activated; under the action of the transmission member, the support shaft rotates relative to the frame. Furthermore, since the support shaft is fixed to the to-be-transferred object, the frame drives the in-wheel motor to rotate, whereby the vehicle mover is steered. The steering process requires no manual involvement, which eases the operator's operation and enables the operator to keep a distance from a vehicle mover so as to keep a safe distance from the to-be-moved object, further enhancing operation safety of the vehicle mover. In addition, the in-wheel motor comprises a wheel hub; a left cap and a right cap are fixedly mounted on two sides of the wheel hub; the left cap, the right cap, and the wheel hub enclose a cavity; the driving motor and the reduction mechanism are disposed between the left cap and the right cap, i.e., the driving motor and the reduction mechanism are both disposed in the cavity, which may further enhance utilization of the internal cavity of the wheel hub and may significantly reduce the footprints of the driving motor and the reduction mechanism, rendering the overall structure of the in-wheel motor more compact and facilitating storage and transportation of the powered transfer wheel. Furthermore, since the driving motor and the reduction mechanism are both disposed within the wheel hub, they can be protected by the wheel hub from a direct external impact, which lowers the possibility of the driving motor and the reduction mechanism from being impacted and damaged; in addition, the tire sleeved around the wheel hub can also absorb the impact on the wheel hub, further reducing the impact on the driving motor and the reduction mechanism, thereby helping to extend their service life. Moreover, a controller is further provided on the frame, via which controller the operator can control the steering motor and the driving motor simultaneously, so that the vehicle mover can perform turning while moving forward or backward; this allows for the vehicle mover to move more flexibly.

Optionally, the transmission member comprises a worm gear and a worm meshing with each other, the worm being drivingly connected to an output shaft of the steering motor, the worm gear being securely connected to the support shaft; and the support shaft rotates synchronously with the worm gear, driving the frame to rotate relative to the support shaft. With this technical solution, due to transmission via the worm gear and the worm, the steering mechanism can precisely control a relative rotation angle between the support shaft and the frame, which realizes precise steering of the overall vehicle mover, improves the operator's control of the vehicle mover, and lowers the possibility of bumping into the to-be-transferred object. In addition, due to driving connection between the worm and the steering motor, the transmission fit between the worm gear and the worm is self-lock enabled, so that the steering motor may control rotation of the worm gear via the worm; when the steering motor is idle, power cannot be transmitted to the worm from the worm gear, i.e., the support shaft cannot control the worm gear for driving the worm to rotate, which may further prevent accidental turning of the vehicle mover; this helps improve operating stability of the vehicle mover and can also enhance operational safety of the vehicle mover. Moreover, the worm gear-worm transmission system has a simple structure, which is easy to assemble and disassemble to facilitate routine repair and maintenance; this helps extend the service life of the vehicle mover and reduce maintenance costs.

Optionally, the steering mechanism comprises an upper housing and a lower housing which are mated to each other, a mounting cavity in which the worm gear and the worm rotate is defined between the upper housing and the lower housing, the lower housing is fixed to the top end of the frame, a bottom end of the support shaft extends through the upper housing into the mounting cavity and is securely connected to the worm gear. With this technical solution, the mating manner between the upper housing and the lower housing simplifies the assembly process of the steering mechanism, which facilitates access to the internal components upon manufacturing and maintenance, so that when a component such as the worm gear or the worm needs maintaining or replacing, the upper housing can be easily disassembled, eliminating a need to remove the entire steering mechanism from the frame. In addition, the support shaft is directly connected to the worm gear, which enables more efficient transmission of a steering drive force and reduces steering deviations due to loose connection or wear, so that the vehicle mover is steered more precisely and accurately.

Optionally, the driving motor comprises a housing, a connecting part being provided at an end portion of the housing proximal to the left cap; a through hole is formed in a central area of the left cap, the connecting part projecting into the through hole and being rotatably fitted with an inner wall of the through hole; and the connecting part is securely connected to the frame.

Optionally, the housing of the driving motor and a housing of the reduction mechanism are formed as a unitary structure. With this technical solution, the driving motor and the reduction mechanism share the same housing, so that the driving motor and the reduction mechanism can be mounted in a more compact manner, further reducing the footprint of the driving motor and the reduction mechanism, which realizes a high degree of integration between the driving motor and the reduction mechanism, rendering the internal structure of the wheel hub more compact. In addition, the housing of the driving motor and the housing of the reduction mechanism are formed as a unitary structure, which renders a stable, reliable connection between the driving motor and the reduction mechanism, reduces a possibility of the connection therebetween getting loose due to vibration, and renders the driving connection between the driving motor and the reduction mechanism tighter and more reliable.

Optionally, the driving motor comprises the housing, a stator fixed to an inner wall of the housing, and a rotor mated with the stator; a convex ring extending towards the right cap is provided on one side of the housing, the convex ring serving as the housing of the reduction mechanism; and one end of the rotor projects in the convex ring and is drivingly connected to the reduction mechanism.

Optionally, the right cap seals the convex ring and is rotatably fitted with the convex ring; and the right cap is provided with a transmission part projecting in the convex ring, the transmission part being securely connected to the moving ring gear and driven to rotate by the moving ring gear. With this technical solution, by sealing the convex ring using the right cap, a housing for the end portion of the reduction mechanism is eliminated, further reducing the footprint of the reduction mechanism and improving compactness of the internal structure of the wheel hub, which can also play a role in retaining the internal structure of the reduction mechanism, thereby maintaining stable and reliable assembly of the internal components of the reduction mechanism.

Optionally, the sun gear and the output shaft of the driving motor are formed as a unitary structure. With this technical solution, by forming the sun gear and the output shaft of the driving motor as a unitary structure, the outer diameter of the sun gear can be significantly reduced, which further shrinks the size of the reduction mechanism to maintain its compactness and lightweight; moreover, by forming the sun gear as a portion of the output shaft of the driving motor, it eliminates a need for separately mounting a sun gear, which simplifies the assembly process and reduces cumulative errors due to the extra mounting step; in addition, this may also ensure that the driving motor stably drives the sun gear to rotate, further enhancing transmission precision and reliability between the sun gear and the planetary gear.

Optionally, the frame comprises a connecting base; a connecting plate extending downward is provided at two sides of the connecting base, respectively; the two connecting plates are rotatably fitted with the left cap and the right cap, respectively; and a plurality of reinforcing ribs inwardly recessed are provided at joints between the connecting plates and the connecting base. With this technical solution, the reinforcing ribs can enhance rigidity of the joints between the connecting base and the connecting plates to further increase the payload of the connecting base, so that the vehicle mover can carry an object of a larger weight and can also lower a possibility of deformation causing damages to the connecting base.

Optionally, the support shaft comprises an inner shaft and an outer shaft, the outer shaft being slidingly connected to the inner shaft; a screw rod is rotatably connected in the outer shaft, and a nut fitted with the screw rod is provided at an end portion of the inner shaft; the screw rod and the nut rotate relative to each other so that the inner shaft and the outer shaft rotate relative to each other.

Other features and advantages of the present invention will be described in detail in exemplary embodiments below with reference to the accompanying drawings.

Hereinafter, the present invention will be further described with reference to the accompanying drawings:
Fig. 1 is a structural schematic diagram of a vehicle mover according to the present invention;
Fig. 2 is a first sectional view of the vehicle mover according to the present invention;
Fig. 3 is a sectional view of an in-wheel motor in the vehicle mover according to the present invention;
Fig. 4 is a second sectional view of the vehicle mover according to the present invention;
Fig. 5 is a sectional view of a steering mechanism in the vehicle mover according to the present invention.

Hereinafter, the technical solutions of the present invention will be explained and illustrated through embodiments with reference to the accompanying drawings. However, the embodiments are only exemplary embodiments of the present invention, not all of them.

In the description of the present invention, it needs to be understood that the orientational or positional relationships indicated by the terms "center," "longitudinal," "transverse," "length," "width," "thickness", "upper," "lower," "front," "rear," "left," "right," "vertical," "horizontal," "top," "bottom," "inner," "clockwise," and "counterclockwise" are orientational and positional relationships based on the drawings, which are intended only for facilitating description of the present invention and simplifying relevant illustrations, not for indicating or implying that the devices or elements compulsorily possess those specific orientations and are compulsorily configured and operated with those specific orientations; therefore, such terms should not be construed as limitations to the present invention.

In the present invention, unless otherwise explicitly provided and limited, the terms such as "mount," "connect," "couple," and "fix" should be understood broadly, which, for example, may refer to a fixed connection, a detachable connection, or an integral connection; which may be a mechanical connection or an electrical connection; which may be a direct connection or an indirect connection via an intermediate medium; which may also be a communication between the insides of two elements. To a person of normal skill in the art, specific meanings of the above terms in the present invention may be construed based on specific situations.

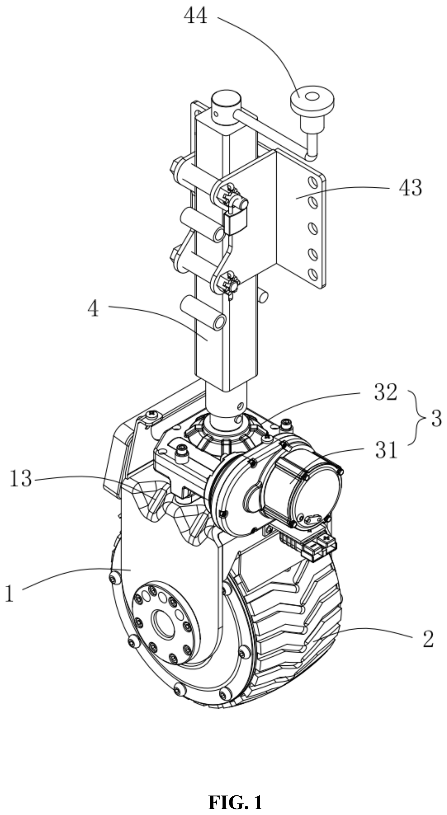

As illustrated in Figs. 1 to 5, a vehicle mover according to this embodiment comprises a frame 1, an in-wheel motor 2 actuating the frame 1 to move, and a support shaft 4 disposed on a top end of the frame 1 and rotatably connected to the frame 1. The in-wheel motor 2 comprises a wheel hub 21 with a tire 26 sleeved around its outer circumferential side and a driving motor 24 driving the wheel hub 21 to rotate. A left cap 22 and a right cap 23 are fixedly mounted on two sides of the wheel hub 21, respectively. A steering mechanism 3 is arranged between the frame 1 and the support shaft 4, the steering mechanism 3 comprising a steering motor 31 and a transmission member drivingly connected to the support shaft 4, the steering motor 31 being fixed relative to the frame 1 and configured to actuate, via the transmission member, the support shaft 4 to rotate relative to the frame 1. A controller configured to control the steering motor 31 and the driving motor 24 is provided on the frame 1. A reduction mechanism 25 is drivingly connected to an output shaft of the driving motor 24. The driving motor 24 and the reduction mechanism 25 are both disposed between the left cap 22 and the right cap 23. The reduction mechanism 25 comprises a sun gear driven by the output shaft, a planetary gear 252 meshing with the sun gear, and a fixed ring gear 253 and a moving ring gear 254 both of which mesh on an outer circumferential side of the planetary gear 252. The fixed ring gear 253 remains stationary relative to the driving motor 24. The moving ring gear 254 is securely connected to the right cap 23. The planetary gear 252 drives the moving ring gear 254 to rotate, thereby driving the right cap 23 to rotate.

In this embodiment, the steering mechanism 3 drives, via the steering motor 31, the transmission member to implement relative rotation between the support shaft 4 and the frame 1. When the vehicle mover is in use, the support shaft 4 is securely connected to a to-be-transferred object; when the vehicle mover needs to turn, the steering motor 31 is activated; under the action of the transmission member, the support shaft 4 rotates relative to the frame 1. Furthermore, since the support shaft 4 is fixed to the to-be-transferred object, the frame 1 drives the in-wheel motor 2 to rotate, whereby the vehicle mover is steered. The steering process requires no manual involvement, which eases the operator's operation and enables the operator to keep a distance from a vehicle mover so as to keep a safe distance from the to-be-moved object, further enhancing operation safety of the vehicle mover. In addition, the in-wheel motor 2 comprises a wheel hub 21; a left cap 22 and a right cap 23 are fixedly mounted on two sides of the wheel hub 21; the left cap 22, the right cap 23, and the wheel hub 21 enclose a cavity; the driving motor 24 and the reduction mechanism 25 are disposed between the left cap 22 and the right cap 23, i.e., the driving motor 24 and the reduction mechanism 25 are both disposed in the cavity, which may further enhance utilization of the internal cavity of the wheel hub 21 and may significantly reduce the footprints of the driving motor 24 and the reduction mechanism 25, rendering the overall structure of the in-wheel motor 2 more compact and facilitating storage and transportation of the powered transfer wheel. Furthermore, since the driving motor 24 and the reduction mechanism 25 are both disposed within the wheel hub 21, they can be protected by the wheel hub 21 from a direct external impact, which lowers a possibility of them from being impacted and damaged; in addition, the tire 26 sleeved around the wheel hub 21 can also absorb the impact on the wheel hub 21, further reducing the impact on the driving motor 24 and the reduction mechanism 25, thereby helping to extend their service life. Moreover, a controller is further provided on the frame 1, via which controller the operator can control the steering motor 31 and the driving motor 24 simultaneously, so that the vehicle mover can perform turning while moving forward or backward; this allows for the vehicle mover to move more flexibly.

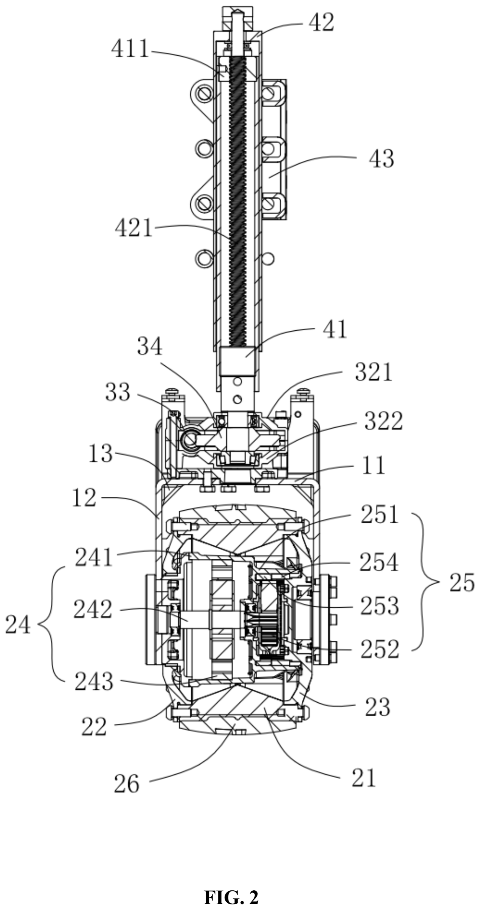

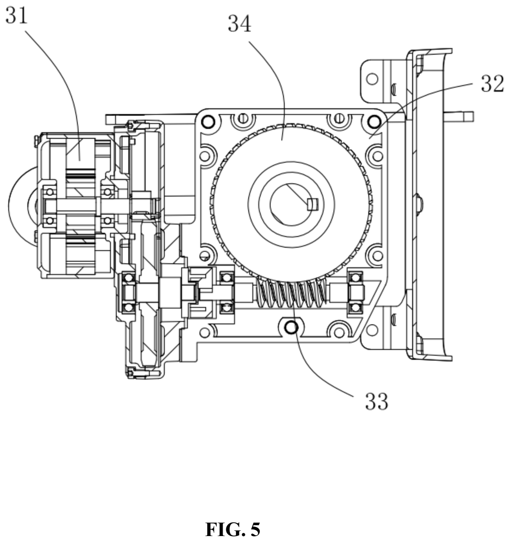

As illustrated in Figs. 2 and 5, the steering mechanism 3 in this embodiment further comprises a worm gearbox 32 secured on top of the frame 1. The transmission member comprises a worm gear 34 and a worm 33. The steering motor 31 is securely connected to the worm gearbox 32 via a reduction gearbox. The worm gearbox 32 comprises an upper housing 321 and a lower housing 322 which are mated to each other. A mounting cavity in which the worm gear 34 and the worm 33 rotate is defined between the upper housing 321 and the lower housing 322. The lower housing 322 is fixedly mounted on an upper surface of the frame 1, and a through hole through which the support shaft 4 projects is formed on a top end of the upper housing 321. A bottom end of the support shaft 4 projects into the mounting cavity and is securely connected to the worm gear 34 in the worm gearbox 32. The mating manner between the upper housing 321 and the lower housing 322 simplifies the assembly process of the steering mechanism 3, which facilitates access to the internal components upon manufacturing and maintenance, so that when a component such as the worm gear 34 or the worm 33 needs maintaining or replacing, the upper housing 321 can be easily disassembled, eliminating a need to remove the entire steering mechanism 3 from the frame 1. In addition, the support shaft 4 is directly connected to the worm gear, which enables more efficient transmission of a steering drive force and reduces steering deviations due to loose connection or wear, so that the vehicle mover is steered more precisely and accurately.

As illustrated in Fig. 2, in this embodiment, the worm gear 34 and the worm 33 are both disposed horizontally, the worm gear 34 being sleeved on an outer surface of the support shaft 4, the bottom end of the support shaft 4 projecting into the lower housing 322 and being rotatably connected to the lower housing 322 via a bearing. In addition, a bearing connected to the support shaft 4 is also provided at the through hole in the upper housing 321. When the vehicle mover needs to turn, the steering motor 31 is activated to drive, via the reduction gearbox, the worm 33 to rotate, further driving the support shaft 4 to rotate due to engagement between the worm 33 and the worm gear 34; since the support shaft 4 is connected to the to-be-transferred object and fixed relative thereto, the frame 1 is driven to rotate relative to the support shaft 4, thus enabling the vehicle mover to turn.

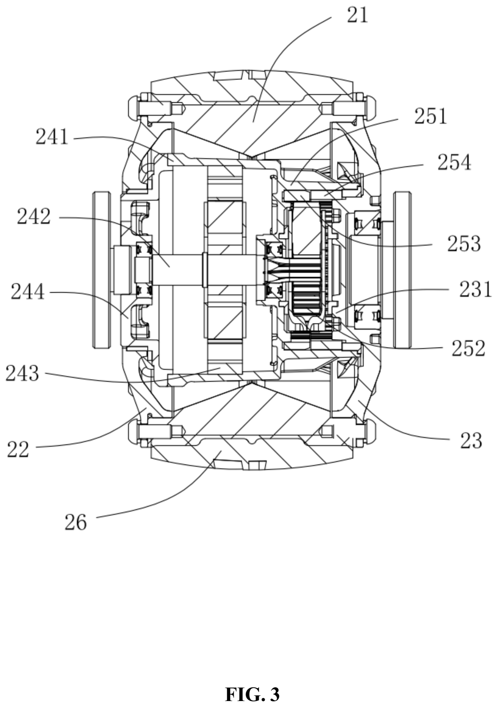

As illustrated in Figs. 2 and 3, in this embodiment, the wheel hub 21 generally has a ring shape. The tire 26 is sleeved around an outer circumferential side of the wheel hub 21. The wheel hub 21 engages the ground surface via the tire 26. The tire 26 may play a role in buffering the wheel hub 21, which reduces bumping of the powered transfer wheel during operation so that the powered transfer wheel moves more stably; in addition, the tire 26 serves as a protection to the wheel hub 21, reduces its potential deformation, and helps extend its service life. In addition, the left cap 22 and the right cap 23 are fixedly mounted on two side surfaces of the wheel hub 21, respectively, the wheel hub 21, the left cap 22 and the right cap 23 enclose an accommodation cavity, and the driving motor 24 and the reduction mechanism 25 are disposed between the left cap 22 and the right cap 23; specifically, one end of the driving motor 24 is rotatably connected to the left cap 22, and the other end thereof is drivingly connected to the reduction mechanism 25; the output end of the reduction mechanism 25 is drivingly connected to the right cap 23; the driving motor 24 drives, via the reduction mechanism 25, the right cap 23 to rotate, and the wheel hub 21 rotates with rotation of the right cap 23, whereby the powered transfer wheel is driven to move.

In this embodiment, the driving motor 24 comprises a housing 241, a stator 243 secured on an inner wall of the housing 241, and a rotor 242 mated with the stator 243, a connecting part 244 being provided at an end portion of the housing 241 proximal to the left cap 22, the connecting part 244 being rotatably connected to the left cap 22, a convex ring 251 extending toward the right cap 23 being provided at an end portion of the housing 241 proximal to the right cap 23, the reduction mechanism 25 being mounted in the convex ring 251, one end of the rotor 242 projecting into the convex ring 251 so as to be drivingly connected to the reduction mechanism 25. In this embodiment, the convex ring 251 and the housing 241 are formed as a unitary structure. By mounting the reduction mechanism 25 in the convex ring 251 so that the driving motor 24 and the reduction mechanism 25 share the same housing 241, the driving motor 24 and the reduction mechanism 25 can be mounted in a more compact manner, further reducing the footprint of the driving motor 24 and the reduction mechanism 25, which realizes a high degree of integration between the driving motor 24 and the reduction mechanism 25, rendering the internal structure of the wheel hub 21 more compact. In addition, the housing 241 of the driving motor 24 and the housing of the reduction mechanism 25 are formed as a unitary structure, which renders a stable, reliable connection between the driving motor 24 and the reduction mechanism 25, reduces a possibility of the connection therebetween getting loose due to vibration, and renders the driving connection between the driving motor 24 and the reduction mechanism 25 tighter and more reliable.

Of course, it is appreciated that, in alternative embodiments, the housing 241 and the convex ring 251 may be separately formed.

As illustrated in Figs. 1 and 2, in this embodiment, the frame 1 comprises a connecting base 11, and a connecting plate 12 extending downward is provided at two sides of the connecting base 11, respectively. The frame 1 generally has an inverted-U shape, and the driving motor 24 is rotatably connected between the two connecting plates 12. Reinforcing ribs 13 inwardly recessed are provided at respective joints between the connecting base 11 and the connecting plates 12. The reinforcing ribs 13 may increase rigidity of the joints between the connecting base 11 and the connecting plates 12, which may further increase the payload of the connecting base 11 so that the vehicle mover can carry a heavier object while reducing a possibility of the connecting base 11 being deformed and damaged; a through hole is formed in the left cap 22 of the wheel hub 21, the connecting part 244 of the housing 241 projecting into the through hole and being rotatably fitted with an inner wall of the through hole via a bearing. The connecting part 244 is securely connected to one of the connecting plates 12, the right cap 23 seals the convex ring 251 and is rotatably fitted with the convex ring 251. A transmission part 231 projecting into the convex ring 251 is provided on the right cap 23, the transmission part 231 is drivingly connected to the reduction mechanism 25 and driven to rotate by the latter, and an outer side of the right cap 23 is drivingly fitted with the other connecting plate 12 via a bearing. By sealing the convex ring 251 using the right cap 23, a housing for the end portion of the reduction mechanism 25 is eliminated, further reducing the footprint of the reduction mechanism 25 and improving compactness of the internal structure of the wheel hub 21, which can also play a role in retaining the internal structure of the reduction mechanism 25, thereby maintaining stable and reliable assembly of the internal components of the reduction mechanism 25.

As illustrated in Fig. 3, in this embodiment, the reduction mechanism 25 comprises a sun gear driven by the output shaft, a planetary gear 252 meshing with the sun gear, and a fixed ring gear 253 and a moving ring gear 254 which mesh on an outer circumferential side of the planetary gear 252; the fixed ring gear 253 remains fixed relative to the driving motor 24, and the moving ring gear 254 is fixedly connected to the right cap 23; the planetary gear 252 drives the moving ring gear 254 to rotate, driving the right cap 23 to rotate. By using the fixed ring gear 253 and the moving ring gear 254 to reduce the speed of the output shaft of the driving motor 24, a higher reduction ratio can be achieved, so that a higher torque can be outputted to the wheel hub 21, enabling the wheel hub 21 to support greater weight with the service scope of the wheel hub 21 being extended. In addition, the fixed ring gear 253 and the moving ring gear 254 share a same planetary gear 252; this may prevent reverse power transmission, i.e., preventing the power from being reversely input to the driving motor 24, which would otherwise cause damage thereto, thereby offering a protection to the driving motor 24 and helping to extend its service life. Moreover, since the power cannot be reversely transmitted, when the driving motor 24 is shut down, the reduction mechanism 25 can be self-locked, preventing the wheel hub 21 from continuing rotation; this ensures stability of the shut-down powered transfer wheel, prevents occurrence of automatic rollaway, and renders operation of the powered transfer wheel safer.

To enhance transmission precision between the sun gear and the output shaft, in this embodiment, the sun gear and the output shaft of the driving motor 24 are formed as a unitary structure, i.e., an outer surface of the end portion of the output shaft is cut into a plurality of toothed parts so as to be capable of maintaining meshing with a plurality of planetary gears 252. By forming the sun gear and the output shaft of the driving motor 24 as a unitary structure, the outer diameter of the sun gear can be significantly reduced, which further shrinks the size of the reduction mechanism 25 to maintain its compactness and lightweight; moreover, by forming the sun gear as a portion of the output shaft of the driving motor 24, it eliminates a need for separately mounting a sun gear, which simplifies the assembly process and reduces cumulative errors due to the extra mounting step; in addition, this may also ensure that the driving motor 24 stably drives the sun gear to rotate, further enhancing transmission precision and reliability between the sun gear and the planetary gear 252.

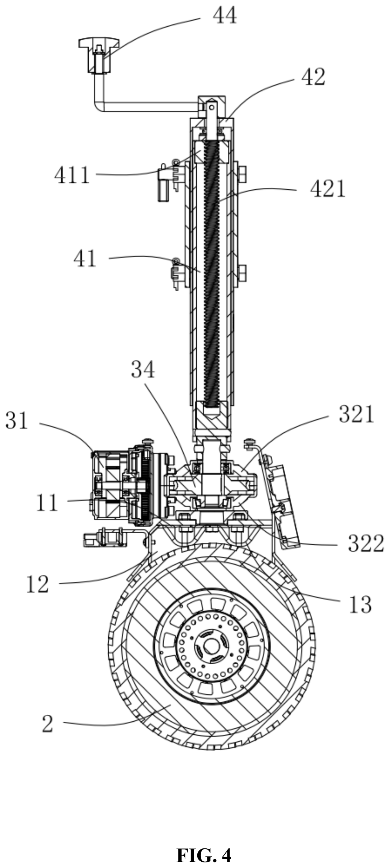

As illustrated in Figs. 1 and 4, in this embodiment, the support shaft 4 comprises an inner shaft 41 and an outer shaft 42, the outer shaft 42 being slidingly connected to the inner shaft 41, a screw rod 421 being rotatably connected in the outer shaft 42, a nut 411 fitted with the screw rod 421 being provided at an end portion of the inner shaft 41, the screw rod 421 and the nut 411 rotating relatively to realize relative sliding between the inner shaft 41 and the outer shaft 42. In addition, to facilitate rotation of the screw rod 421, in this embodiment, a top end of the screw rod 421 passes through a top end of the outer shaft 42 and is securely attached with a grip 44, so that the operator may turn the grip 44 to realize rotation of the screw rod 421. Moreover, a clamp 43 is fixedly mounted on an outer surface of the outer shaft 42, and the support shaft 4 secures the to-be-transferred object via the clamp 43; then, the operator turns the grip 44 to control the outer shaft 42 and the inner shaft 41 to slide relatively, causing the support shaft 4 to extend progressively; when the to-be-moved object is lifted to a designated height, the operator may control the wheel hub 21 to start, whereby an effect of vehicle moving is achieved.

Furthermore, to make the vehicle mover operate more smartly, in this embodiment, a mount base is arranged on the frame 1, a controller being fixed in the mount base, the controller being configured to control the steering motor 31 and the driving motor 24; in addition, the controller is equipped with a remote control so that the operator may control the vehicle mover via the remote control. The controller may control the vehicle mover to turn left or right during its forward or rearward movement, which realizes that the vehicle mover can turn while moving forward or rearward; this may enhance smartness of the vehicle mover and also allows the operator to keep a distance from the operating range of the vehicle mover, thereby significantly enhancing operational safety of the vehicle mover.

In this embodiment, the support shaft 4 may be fixed to a heavy object for transfer; as such, the vehicle mover can be used to move an unpowered recreational vehicle or trailer. Of course, in other embodiments, a plurality of support wheels of the vehicle mover may be combined into a multi-drive transfer trolley that can be applied in logistic transportation to move objects for storage and delivery. Of course, it is appreciated that in other embodiments, the vehicle mover is applied to an automobile sector, i.e., mounted on a vehicle. The powered transfer wheel in this embodiment can be directly driven, which eliminates a complex structure such as a chassis.

What have been described above are only example embodiments of the present invention; however, the protection scope of the present invention is not limited thereto. A person skilled in the art should understand that the present invention includes, but is not limited to, the contents described in the drawings and the embodiments.

### Reference Numerals:

- 1: frame
- 11: connecting base
- 12: connecting plate
- 13: reinforcing rib
- 2: in-wheel motor
- 21: wheel hub
- 22: left cap
- 23: right cap
- 231: transmission part
- 24: driving motor
- 241: housing
- 242: rotor
- 243: stator
- 244: connecting part
- 25: reduction mechanism
- 251: convex ring
- 252: planetary gear
- 253: fixed ring gear
- 254: moving ring gear
- 26: tire
- 3: steering mechanism
- 31: steering motor
- 32: worm gearbox
- 321: upper housing
- 322: lower housing
- 33: worm
- 34: worm gear
- 4: support shaft
- 41: inner shaft
- 411: nut
- 42: outer shaft
- 421: screw rod
- 43: clamp
- 44: grip

## Claims

1. A vehicle mover, comprising a frame (1), an in-wheel motor (2) configured to drive the frame (1) to move, and a support shaft (4) disposed on a top end of the frame (1) and rotatably connected to the frame (1), the in-wheel motor (2) comprising a wheel hub (21) with a tire sleeved around its outer circumferential side and a driving motor (24) actuating the wheel hub (21) to rotate, a left cap (22) and a right cap (23) being fixedly mounted on two sides of the wheel hub (21), **characterized in that** a steering mechanism (3) is disposed between the frame (1) and the support shaft (4), the steering mechanism (3) comprising a steering motor (31) and a transmission member drivingly connected to the support shaft (4); the steering motor (31) is fixed relative to the frame (1) and configured to drive, via the transmission member, the support shaft (4) to rotate relative to the frame (1); a controller configured to control the steering motor (31) and the driving motor (24) is provided on the frame (1); a reduction mechanism (25) is drivingly connected to an output shaft of the driving motor (24), the driving motor (24) and the reduction mechanism (25) being both located between the right cap (23) and the left cap (22); and the reduction mechanism (25) comprises a sun gear driven by the output shaft, a planetary gear (252) meshing with the sun gear, and a fixed ring gear (253) and a moving ring gear (254) which mesh on an outer circumferential side of the planetary gear (252), the fixed ring gear (253) remaining fixed relative to the driving motor (24), the moving ring gear (254) being securely connected to the right cap (23), the planetary gear (252) driving the moving ring gear (254) to rotate, whereby the right cap (23) is driven to rotate.

2. The vehicle mover of claim 1, **characterized in that** the transmission member comprises a worm gear (34) and a worm (33) meshing with each other, the worm (33) being drivingly connected to an output shaft of the steering motor (31), the worm gear (34) being securely connected to the support shaft (4); and the support shaft (4) rotates synchronously with the worm gear (34), driving the frame (1) to rotate relative to the support shaft (4).

3. The vehicle mover of claim 2, **characterized in that** the steering mechanism (3) comprises an upper housing (321) and a lower housing (322) which are mated to each other, a mounting cavity in which the worm gear (34) and the worm (33) rotate is defined between the upper housing (321) and the lower housing (322), the lower housing (322) is fixed to the top end of the frame (1), a bottom end of the support shaft (4) extends through the upper housing (321) into the mounting cavity and is securely connected to the worm gear (34).

4. The vehicle mover of claim 1, **characterized in that** the driving motor (24) comprises a housing (241), a connecting part (244) being provided at an end portion of the housing (241) proximal to the left cap (22); a through hole is formed in a central area of the left cap (22), the connecting part (241) projecting into the through hole and being rotatably fitted with an inner wall of the through hole; and the connecting part (241) is securely connected to the frame (1).

5. The vehicle mover of claim 1, **characterized in that** the housing (241) of the driving motor (24) and a housing of the reduction mechanism (25) are formed as a unitary structure.

6. The vehicle mover of claim 5, **characterized in that** the driving motor (24) comprises the housing (241), a stator (243) fixed to an inner wall of the housing (241), and a rotor (242) mated with the stator (243); a convex ring (251) extending towards the right cap (23) is provided on one side of the housing (241), the convex ring (251) serving as the housing of the reduction mechanism (25); and one end of the rotor (242) projects in the convex ring (251) and is drivingly connected to the reduction mechanism (25).

7. The vehicle mover of claim 6, **characterized in that** the right cap (23) seals the convex ring (251) and is rotatably fitted with the convex ring (251); and the right cap (23) is provided with a transmission part (231) projecting in the convex ring (251), the transmission part (231) being securely connected to the moving ring gear (254) and driven to rotate by the moving ring gear (254).

8. The vehicle mover of claim 1, **characterized in that** the sun gear and the output shaft of the driving motor (24) are formed as a unitary structure.

9. The vehicle mover of claim 1, **characterized in that** the frame (1) comprises a connecting base (11); a connecting plate (12) extending downward is provided at two sides of the connecting base (11), respectively; the two connecting plates (12) are rotatably fitted with the left cap (22) and the right cap (23), respectively; and a plurality of reinforcing ribs (13) inwardly recessed are provided at joints between the connecting plates (12) and the connecting base (11).

10. The vehicle mover of claim 1, **characterized in that** the support shaft (4) comprises an inner shaft (41) and an outer shaft (42), the outer shaft (42) being slidingly connected to the inner shaft (41); a screw rod (421) is rotatably connected in the outer shaft (42), and a nut (411) fitted with the screw rod (421) is provided at an end portion of the inner shaft (41); the screw rod (421) and the nut (411) rotate relative to each other so that the inner shaft (41) and the outer shaft (42) rotate relative to each other.
